# EUROPEAN PATENT APPLICATION

(11) **EP 2 482 533 A2**
(43) Date of publication of application: **01.08.2012**
(21) Application number: 11170779.0
(22) Date of filing: 21.06.2011
(51) Int. Cl.: H04M 9/08

(54) **Echo suppression**

(30) Priority: 28.01.2011 US 931282
(71) Applicant: Mitel Networks Corporation, Ottawa, ON K2K 2W7 (CA)
(72) Inventor: Wu, Anjie, Kanata, Ontario K2K 3K6 (CA); El-Solh, Abdel-Aziz, Ottawa, Ontario K1G 4B5 (CA)
(74) Representative: Venner Shipley LLP

(57) **Abstract**

The enhancements provided herein are designed to allow an acoustic echo suppressor algorithm to operate with significant echo path delay between an audio block Rᵢₙ and audio block Sᵢₙ. In one illustration, a single reference sample or envelope value can be taken from the received audio block Rᵢₙ. Through an algorithm, echo signals can be suppressed and/or masked from audio block Sᵢₙ by delaying the previously captured reference sample and aligning the delayed reference sample with multiple samples of the audio block Sᵢₙ. Instead of each individual reference sample being matched with an individual sample of the audio block Sᵢₙ, a single captured and delayed reference sample or envelope value can be matched with multiple samples of audio block Sᵢₙ. The algorithm presented improves voice quality on a telephone call while reducing buffer requirements.

## Description

This application generally relates to echo suppression and particularly, although not exclusively, to a wireless handset or headset, and more particularly, to suppressing echoes generated by the wireless handset or headset where the echo path contains significant delay.

Echoes in telephone handsets and headsets are a normal and expected side-effect often occurring when signals broadcast by the speaker of a telephone device are picked up by the microphone of the same telephone device. IP phones having a handset or headset thereon can minimize the perception of this echo through an acoustic echo suppressor (AcES) algorithm, which is described in U.S. Patent No. 7,212,628 to Popovic et al. titled ECHO CANCELLATION/SUPPRESSION AND DOUBLE-TALK DETECTION IN COMMUNICATION PATHS and U.S. Patent No. 6,999,582 to Popovic et al. titled ECHO CANCELLING/SUPPRESSION FOR HANDSETS. For the algorithm to function, a reference sample and echo signal are aligned in time. With wired handsets or headsets, the echo path delay from a reference sample to an echo signal is minimal and sufficient for current implementation of the AcES. However, when echo path delays increase, for example with the use of a Bluetooth™ wireless link, voice quality is noticeably degraded. Current implementations of the AcES does not compensate for this so that the acoustic echo will not be corrected. The problem therefore becomes how to compensate for the increased echo path delay with Bluetooth™ wireless links i.e. aligning the reference sample with the outgoing signal from the microphone for the AcES algorithm to properly work.

Traditionally, with Bluetooth™ handsets and headsets, acoustic echo suppression is performed on the handset or headset itself such that the wireless link delay is not in the echo path. However, reuse of existing technologies is sometimes required. To fulfil these requirements the audio path could use upgrades to the current AcES to compensate for longer echo path delays. It is therefore an object of the present application to provide an enhancement to the current AcES algorithm to allow it to efficiently compensate for extended echo path delay. The present application addresses the above-described encountered issues and provides other related advantages.

The novel features believed to be characteristic of the application are set forth in the appended claims. In the descriptions that follow, like parts are marked throughout the specification and drawings with the same numerals, respectively. The drawing figures are not necessarily drawn to scale and certain figures can be shown in exaggerated or generalized form in the interest of clarity and conciseness. The application itself, however, as well as a preferred mode of use, further objectives and advantages thereof, will be best understood by reference to the following detailed description of illustrative embodiments when read in conjunction with the accompanying drawings, wherein:
Figure 1 illustratively depicts audio through an echo suppressor over a corded handset or headset in accordance with one aspect of the present application;
Figure 2 illustratively provides an audio path over a Bluetooth™ handset or headset in accordance with one aspect of the present application;
Figure 3 shows an exemplary alignment between a Rᵢₙ sample with Sᵢₙ block for echo suppression in accordance with one aspect of the present application;
Figure 4 is an exemplary block diagram illustrating the alignment for echo suppression in accordance with one aspect of the present application; and
Figure 5 shows a plot of input/output signals of the exemplary echo suppressor in accordance with one aspect of the present application.

The description set forth below in connection with the appended drawings is intended as a description of presently preferred embodiments of the application and is not intended to represent the only forms in which the present application can be constructed and/or utilized. The description sets forth the functions and the sequence of steps for constructing and operating the application in connection with the illustrated embodiments. It is to be understood, however, that the same or equivalent functions and sequences can be accomplished by different embodiments that are also intended to be encompassed within the scope of this application.

Generally described, the present application relates to echo suppression for wireless handsets and headsets. More specifically, the present application relates to suppressing echoes generated by wireless handsets or headsets using a delayed reference sample aligned with multiple samples of echo for improving voice quality on a telephone call while reducing buffer requirements. The system and method described herein provides an enhancement to an AcES algorithm provided in U.S. Patent No. 7,212,628 to Popovic et al. titled ECHO CANCELLATION/SUPPRESSION AND DOUBLE-TALK DETECTION IN COMMUNICATION PATHS and U.S. Patent No. 6,999,582 to Popovic et al. titled ECHO CANCELLING/SUPPRESSION FOR HANDSETS, which are hereby incorporated by reference in their entirety. The enhancement can allow the acoustic echo suppressor (AcES) algorithm to operate with significant echo path delay between a reference audio block Rᵢₙ (provided to a speaker of the handset or headset) and an echo audio block Sᵢₙ (received through a microphone of the handset or headset). Through the AcES algorithm, echo signals can be suppressed and/or masked from audio block Sᵢₙ by delaying a previously captured reference sample of audio block Rᵢₙ and aligning the delayed reference sample with multiple samples of the audio block Sᵢₙ. Instead of each individual reference sample being matched with an individual sample of the audio block Sᵢₙ, a single reference sample of audio block Rᵢₙ can be matched with multiple samples of the audio block Sᵢₙ.

Numerous advantages can be provided through the echo suppressor as illustrated above. While the system and method is intended to enhance the AcES algorithm described in U.S. Patent No. 7,212,628 and U.S. Patent No. 6,999,582, those skilled in the relevant art will appreciate that the described system and method can be used in a number of different echo suppression approaches. Furthermore, the system and method used herein can also be better adapted to suppress echoing effects not present in current technologies by reducing the amount of memory used by reference samples regardless of the sampling rate as the buffer size remains constant. Many additional features and elements of the present application will become apparent to those of ordinary skill in the relevant art as provided for in the following description.

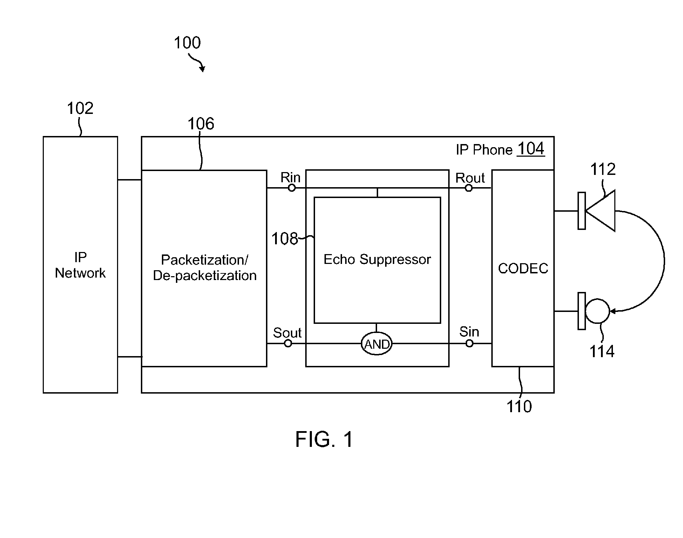

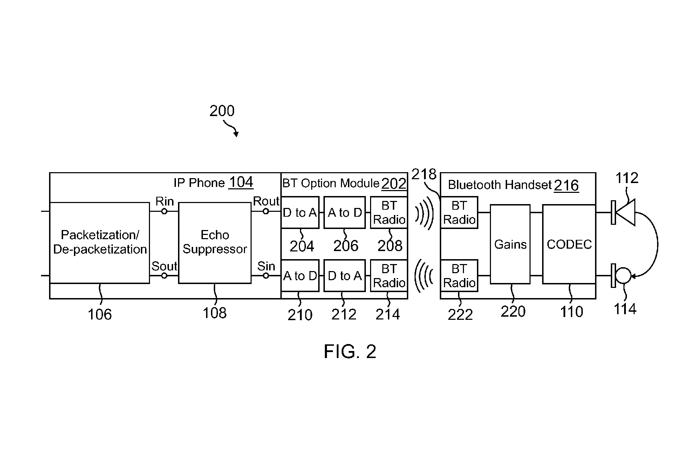

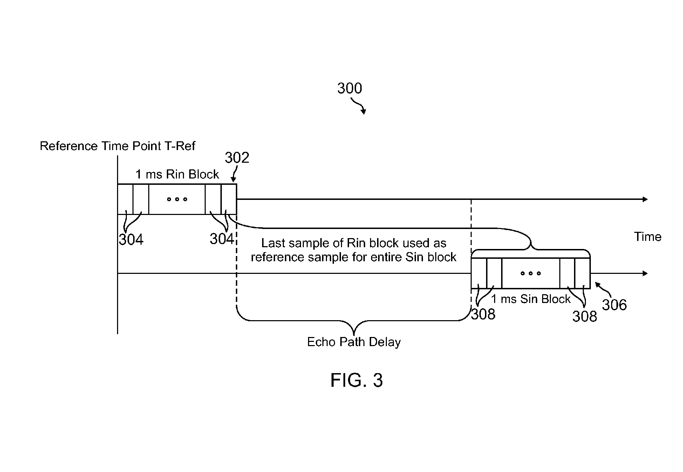

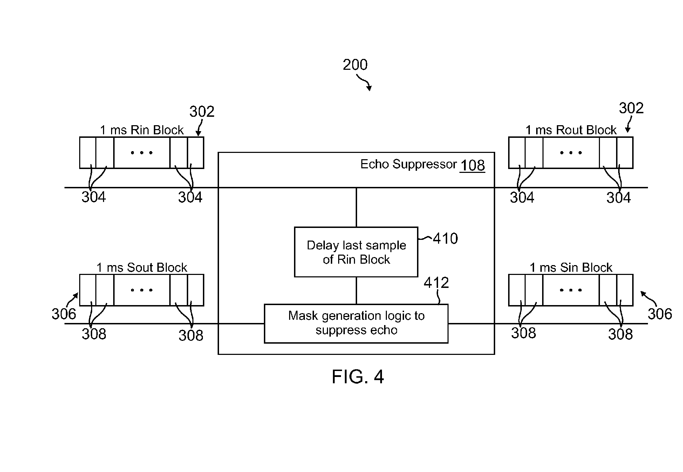

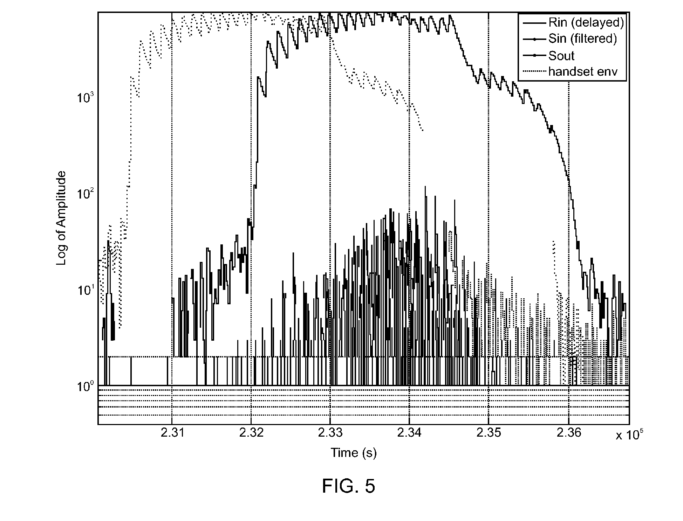

Before describing embodiments of the present application, current systems will be described including a phone having a corded handset or headset in Figure 1 and a wireless handset or headset in Figure 2. Echo suppression for wireless handsets or headsets will be described thereafter in Figures 3 and 4. Figure 5 provide exemplary results of the echo suppression.

Turning to Figure 1, audio through an echo suppressor 108 over a corded handset or headset in accordance with one aspect of the present application is described. While an IP phone 104 is provided for, other devices known to those skilled in the relevant art can be used, for example, a cellular phone, smartphone, etc. The IP phone 104 can include one or many processing units for parallel processing.

Those skilled in the relevant art will appreciate that the logic provided within the IP phone 104 can be distributed over many computer-like systems and is not limited to a centralized location. The logic can be provided on computer-readable medium. Any type of computer-readable medium that can store data and is accessible by a computer, for example, magnetic cassettes, flash memory cards, digital video disks, RAM, and ROM, can be used in system 100.

A number of program modules representing the logic described herein can be stored on the IP phone 104. The technology described herein can be implemented as modules in one or more systems. The logical operations can be implemented as a sequence of processor-implemented steps executing in one or more computer systems and as interconnected machine or circuit modules within one or more computer systems. Likewise, the descriptions of various logic modules can be provided in terms of operations executed or effected by the modules. The resulting implementation is a matter of choice, dependent on the performance requirements of the underlying system implementing the described technology. Accordingly, the logical operations making up the embodiment of the technology described herein are referred to variously as operations, steps, objects, or modules. Furthermore, it should be understood that logical operations can be performed in any order, unless explicitly claimed otherwise or a specific order is inherently necessitated by the claim language.

Within the system 100 audio signals or other forms of communications can be received over an IP network 102. Alternatively, audio signals can be received over a plain old telephone service or the like. The IP network 102 can be represented as a local area network (LAN), wide area network (WAN), personal area network (PAN), campus area network (CAN), metropolitan area network (MAN), global area network (GAN) or combination thereof. Such networking environments are commonplace in office networks, enterprise-wide computer networks, intranets and the Internet.

The IP phone 104 can de-packetize data coming from the IP network 102 through logic 106 implemented on the IP phone 104. Through de-packetisation, the data can be provided in a more useable form by the IP phone 104. The audio Rᵢₙ from the packetisation/de-packetisation logic 106 can be provided to the echo suppressor 108. The audio Rᵢₙ can also be transmitted to encoding and decoding (CODEC) logic 110 as Rₒᵤₜ. The audio stream from the CODEC logic 110 can be provided to a speaker 112.

Acoustic coupling occurs generally from the speaker 112 to the microphone 114 where audio signals from the speaker 112 are picked up. Audio having echoing can be received through the microphone 114 and passed to the CODEC logic 110. The CODEC logic 110 in turn can provide the audio signals Sᵢₙ to the echo suppressor 108. The echo suppressor 108 can remove echoes and provide the outgoing audio Sₒᵤₜ to the packetisation/de-packetisation logic 106 where it can be converted to a form usable by the IP network 102.

At the echo suppressor 108, the IP phone 104 can minimize the perception of echoing through the AcES algorithm. For this algorithm to function, a reference sample Rᵢₙ (heading to the speaker 112) and the corresponding echo audio Sᵢₙ (retrieved from the microphone 114) are aligned in time. With wired handsets or headsets, the echo path delay from Rᵢₙ to Sᵢₙ is minimal and sufficient for current implementation of the AcES.

Details of the AcES functionality are provided in U.S. Patent No. 7,212,628 and U.S. Patent No. 6,999,582. The AcES attempts to analyze the reference sample and echo energy to create a mask to suppress the echo. The echo suppressor 108 can perform an "AND" operation or the like with the echo signal as shown in Figure 1. In some embodiments, a power level calculator can determine the power level of the reference signal Rᵢₙ broadcast by the handset or headset speaker 112. A mask generator is responsive to the power level calculator and generates masks that are a function of the determined power levels to suppress echo signals Sᵢₙ received by the handset or headset microphone 114. To avoid noticeable switching effects in the presence of background noise, the echo suppressor 108 can be conditioned to generate leaky masks. During execution of the AcES algorithm within the echo suppressor 108, double talk can also be removed. Double talk can be declared whenever the signal received by the microphone 114 is bigger than the expected echo signal.

Those skilled in the relevant art will appreciate that the system 100 described above is some embodiments and should not be construed as the only one. When the audio path is delayed, i.e. Rᵢₙ to Sᵢₙ, issues arise within the AcES 108 as currently implemented.

Figure 2 illustratively provides an audio path over a Bluetooth^{™} handset or headset 216 in accordance with one aspect of the present application. Known to those skilled in the relevant art, the system 200 can be used with other wireless technologies and is not limited to Bluetooth™. The system 200 can also carry the same features and functions of system 100 shown above. In this IP phone 104, the echo suppressor 108 can be coupled to a Bluetooth™ option module 202. The Bluetooth™ option module 202 can incorporate analogue-to-digital and digital-to-analogue converters 204, 206, 208, 210, 212 and 214. Bluetooth™ radios 208 and 214 can also be incorporated within the Bluetooth™ option module 202.

Bluetooth™ radio 208 can be used to provide audio signals, while Bluetooth™ radio 2104 can be used to receive outgoing audio signals.

The Bluetooth™ radios 208 and 214 in the Bluetooth™ option module 202 can communicate with a Bluetooth™ handset or headset 216. The Bluetooth™ handset or headset 216 can include Bluetooth™ radios 218 and 222 for communicating with the Bluetooth™ option module 202. The Bluetooth™ handset or headset 216, as further shown in Figure 2, can typically include gains logic 220 which can increase the power of a signal. The increased signal can be fed into the CODEC logic 110 whereby it is provided to a speaker 112 on the Bluetooth™ handset or headset 216.

Acoustic coupling occurs generally from the speaker 112 to the microphone 114 where audio signals from the speaker 112 are picked up. Audio Sᵢₙ having echoing can typically be received through the microphone 114 on the Bluetooth™ handset or headset 216 and passed to the Bluetooth™ option module 202. The AcES along with the enhancement provided in the scope of this application can remove echoes and thereafter the audio Sₒᵤₜ can be provided to the packetisation/de-packetisation logic 106 where it can be converted to a form usable by the IP network 102.

At the echo suppressor 108, the IP phone 104 can minimize the perception of echoing through an enhanced AcES algorithm. For this algorithm to function, the reference sample Rᵢₙ and echo signals Sᵢₙ are aligned in time. With wireless handsets or headsets 216, the echo path delay from Rᵢₙ to Sᵢₙ has been extended. As can be seen, the analogue-to-digital and digital-to-analogue converters 204, 206, 208, 210, 212 and 214 along with the BT radios 208, 214, 218 and 222 lengthen the audio path delay and therefore the current implementation is insufficient for the AcES algorithm.

In Figure 2, the system 200 incorporates a sizable Bluetooth™ link delay, for example, approximately sixty to sixty-five milliseconds in total. Known to those skilled in the relevant art, however, almost any type of delay can be accounted for in the modified AcES algorithm. Using the current AcES algorithm, the required delay compensation buffers can be very large. Illustratively, consider that sixty-five milliseconds of narrowband delay, at eight kilohertz sampling, generally requires a buffer size of five hundred and twenty words. Furthermore, sixty milliseconds of wideband delay at sixteen kilohertz sampling, requires a buffer size of one thousand and forty words to align the reference and echo signals as required. Comparing that to the total memory requirement of the AcES algorithm of eighty-six words, it becomes clear that a simple sample based delay is inefficient use of memory.

In further elaboration of the AcES algorithm used, Figure 3 shows an exemplary alignment between a Rᵢₙ block 302 with Sᵢₙ block 306 for echo suppression in accordance with one aspect of the present application. The echo path delay provided within system 200 extended the time it takes for the Sᵢₙ block 306 to be retrieved. The echo suppressor 108 can use delays to align individual Rᵢₙ samples 304 of Rᵢₙ block 302 to Sᵢₙ samples 308 of outgoing audio signals captured in Sᵢₙ block 304. However, such a sample-by-sample basis is inefficient as illustrated above.

The AcES 108 enhancement outlined within the current application is designed to cut memory requirements down by a factor of eight for narrow band implementations and a factor of sixteen for wideband implementations to unify the memory requirements of both modes to a single buffer length of sixty-five words. In fact, regardless of the sampling rate, buffer size typically remains constant.

In context of the enhancement to the AcES provided within this application, consider graph alignment 300 that illustrates the sampling of the reference Rᵢₙ block 302. Instead of each individual sample 304 of the Rᵢₙ block 302 being matched with an individual sample 308 of the Sᵢₙ block 306, a single sample 304 of the Rᵢₙ block 302 can be matched with all samples 308 of Sᵢₙ block 306. As shown, the last sample 304 of the Rᵢₙ block 302 can be used as the sample reference for use with the AcES algorithm. The reference sample, in other embodiments, can be taken from the first sample 304 of the Rᵢₙ block 302 or any sample 304 therebetween. It is important to note that the reference Rᵢₙ block 302 can be a block of raw samples 304 or an envelope calculated from the raw samples 304. Those skilled in the relevant art can appreciate that using an envelope of reference samples 304 versus raw samples 304 can assist in smoothing out sharp transitions in the speech signal and provide more stable performance. Therefore, from this point forward, the term Rᵢₙ will be used to indicate raw samples 304 and/or envelopes.

The AcES algorithm can execute in a one millisecond processing block interval. Hence one millisecond blocks at Rᵢₙ and Sᵢₙ 302 and 306 respectively are collected before sending to AcES for processing. Based on observations of speech signal behaviour, a one millisecond granularity is sufficient for the AcES algorithm to mask acoustic echo. Those skilled in the relevant art will appreciate that other lengths of granularity can be used and still be analyzed on a sample-by-sample level and the mask applied as such. The calculation of reference energy, i.e. reference envelope, can also be performed on a sample-by-sample basis. This reference envelope calculation is then saved every millisecond and matched to the corresponding Sᵢₙ block 306.

The enhancement proposed within this application can operate under a variety of sampling rates including the eight kilohertz narrowband and sixteen kilohertz wideband rates. The enhancement can also operate under multiple sampling block sizes. In some embodiments, it can operate with one millisecond audio blocks. In some embodiments it can operate within ten milliseconds audio blocks. Hence audio block size is not a limitation of this enhancement and this application applies to all audio block sizes.

Figure 4 is an exemplary block diagram illustrating the alignment for echo suppression in accordance with one aspect of the present application. The system 200 receives Rᵢₙ block 302 at echo suppressor 108. Recall that Rᵢₙ can either be samples or envelope. At the echo suppressor 108, the Rᵢₙ block 302 is captured to form a Rᵢₙ reference sample 304 at 410. Typically, the Rᵢₙ reference sample 304 is the last sample within the Rᵢₙ block 302. The Rᵢₙ block 302 is then provided to the handset or headset 216 where it can be sent to the speaker 112 and heard by a user of the handset or headset 216. As described above, the Rᵢₙ block 302 changes to a Rₒᵤₜ block 302 after passing through the echo suppressor 108.

The user of the Bluetooth™ handset or headset 216 can then provide audio signals, which can be captured in one millisecond blocks 306. The Sᵢₙ block 306 can then be provided to the echo suppressor 108 where echo signals within the audio signals can be suppressed. At 412, the echoes can be removed using mask generation logic and the delayed Rᵢₙ reference sample 304 of block 302. The reference sample Rᵢₙ 304 was delayed so that it could be matched with one or more samples 308 of the Sᵢₙ block 306. Thereafter, the Sᵢₙ block 306 changes to a Sₒᵤₜ block 306 after passing through the echo suppressor 108.

Referring now to Figure 5, a plot of input/output signals of the exemplary echo suppressor 108 in accordance with one aspect of the present application is provided. This example uses wideband sixteen kilohertz sampling. As shown, the delayed Rᵢₙ block 302 can be held for one millisecond or the duration of a Sᵢₙ block 306. While the non-delayed Rᵢₙ block 302, labelled "handset env", is not properly aligned with the Sᵢₙ block 306, the delayed Rᵢₙ sample 304 is correctly aligned for removal of the echoes.

In accordance with one aspect of the present application, a method for suppressing echo signals generated between a speaker and a microphone having echo path delay on at least one of a wireless handset and headset is provided. The method can include capturing a reference sample from an audio block provided to the speaker. In addition, the method can include delaying and aligning the reference sample with multiple samples of an audio block received through the microphone.

In some embodiments, capturing the reference sample can include using raw data of the audio block provided to the speaker. In some embodiments, capturing the reference sample can include using an envelope calculation of the audio block provided to the speaker. In some embodiments, capturing the reference sample can include using approximately a one millisecond interval from the audio block provided to the speaker.

In some embodiments, capturing the reference sample can include taking the reference sample from multiple samples contained in the audio block provided to the speaker. In some embodiments, taking the reference sample from the multiple samples can include using a first sample within the multiple samples contained in the audio block provided to the speaker. In some embodiments, taking the reference sample from the multiple samples can include using a last sample within the multiple samples contained in the audio block provided to the speaker.

In some embodiments, the method can include sampling audio blocks provided to the speaker and received through the microphone at different frequencies. In some embodiments, sampling the audio blocks provided to the speaker and received through the microphone can include using eight kilohertz narrowband. In some embodiments, sampling the audio blocks provided to the speaker and received through the microphone can include using sixteen kilohertz wideband. In some embodiments, the method can include temporarily storing the reference sample.

In accordance with another aspect of the present application, an apparatus for at least one of a wireless handset and headset is provided. The apparatus can include at least one processor and a memory operatively coupled to the processor, the memory storing program instructions that when executed by the processor, can cause the processor to perform processes. The processes can include determining a reference sample. In addition, the processes can include suppressing echoes from an audio block by delaying the reference sample and aligning the reference sample with multiple samples of the audio block.

In some embodiments, the reference sample can be delayed by approximately sixty to sixty-five milliseconds. In some embodiments, the delay can be for a Bluetooth™ wireless connection. In some embodiments, delaying the reference sample can include accounting for time introduced by at least one of an analogue-to-digital converter, digital-to-analogue converter and a digital coder-decoder.

In accordance with yet another aspect of the present application, a system is provided. The system can include acoustic echo suppressor logic for generating a reference sample and masking echo signals from audio by delaying the reference sample by a period of time and aligning the reference sample with multiple samples of the audio.

In some embodiments, the period of time can take into account of delays introduced by at least one of a wireless headset and handset. In some embodiments, the reference sample can be taken from an audio block provided to the at least one of a wireless headset and handset. In some embodiments, the audio can be sampled using eight kilohertz narrowband. In some embodiments, the audio can be sampled using sixteen kilohertz wideband.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public regardless of whether such disclosure is explicitly recited in the claims.

## Claims

1. A method for suppressing echo signals generated between a speaker and a microphone having echo path delay on at least one of a wireless handset and headset comprising:
capturing a reference sample from an audio block provided to said speaker; and
delaying and aligning said reference sample with multiple samples of an audio block received through said microphone.

2. The method of claim 1, wherein capturing said reference sample comprises using raw data of said audio block provided to said speaker.

3. The method of claim 1 or claim 2, wherein capturing said reference sample comprises using an envelope calculation of said audio block provided to said speaker.

4. The method of any of claims 1 to 3, wherein capturing said reference sample comprises using approximately a one millisecond interval from said audio block provided to said speaker.

5. The method of any preceding claim, wherein capturing said reference sample comprises taking said reference sample from multiple samples contained in said audio block provided to said speaker.

6. The method of claim 5, wherein taking said reference sample from said multiple samples comprises using a first sample within said multiple samples contained in said audio block provided to said speaker or alternatively wherein taking said reference sample from said multiple samples comprises using a last sample within said multiple samples contained in said audio block provided to said speaker.

7. The method of any preceding claim, comprising sampling audio blocks provided to said speaker and received through said microphone at different frequencies

8. The method of claim 7, wherein sampling said audio blocks provided to said speaker and received through said microphone comprises using eight kilohertz narrowband or alternatively using sixteen kilohertz wideband.

9. The method of any preceding claim, comprising temporarily storing said reference sample.

10. An apparatus for at least one of a wireless handset and headset comprising:
at least one processor; and
a memory operatively coupled to said processor, said memory storing program instructions that when executed by said processor, causes said processor to:
determine a reference sample;
suppress echoes from audio, for instance an audio block, by delaying said reference sample by a period of time and aligning said reference sample with multiple samples of said audio.

11. The apparatus of claim 10, wherein said reference sample is delayed by approximately sixty to sixty-five milliseconds and optionally wherein said delay is for a Bluetooth™ wireless connection.

12. The apparatus of claim 10 or claim 11, wherein delaying said reference sample comprises accounting for time introduced by at least one of an analogue-to-digital converter, digital-to-analogue converter and a digital coder-decoder.

13. An apparatus as claimed in any of claims 10 to 12 wherein the reference sample is generated by acoustic echo suppressor logic.

14. The apparatus of any of claims 10 to 13, wherein said period of time takes into account of delays introduced by at least one of a wireless headset and handset and optionally wherein said reference sample is taken from an audio block provided to said at least one of a wireless headset and handset.

15. The apparatus of any of claims 10 to 14, wherein said audio is sampled using eight kilohertz narrowband or alternatively using sixteen kilohertz wideband.
